# EUROPÄISCHE PATENTSCHRIFT

(11) **EP 0 688 396 B1**
(45) Veröffentlichungstag und Bekanntmachung des Hinweises auf die Patenterteilung: **21.05.1997**
(21) Anmeldenummer: 94909076.5
(22) Anmeldetag: 26.02.1994
(51) Int. Cl.: F02M 55/02, F16L 41/12

(54) **HOCHDRUCK-LEITUNGSVERBINDUNG**
HIGH-PRESSURE LINE CONNECTION
RACCORDEMENT DE CONDUITE HAUTE PRESSION

(30) Priorität: 11.03.1993 DE 4307650
(43) Veröffentlichungstag der Anmeldung: 27.12.1995
(73) Patentinhaber: Motorenfabrik Hatz GmbH & Co. KG, D-94099 Ruhstorf (DE)
(72) Erfinder: Kampichler, Günter, D-94099 Ruhstorf (DE); Geier, Herbert, D-94099 Ruhstorf (DE)
(74) Vertreter: Grättinger, Günter
(86) Internationale Anmeldenummer: EP9400566
(87) Internationale Veröffentlichungsnummer: WO9420746

(56) Entgegenhaltungen:
- DE-A- 4 030 484
- FR-A- 1 086 880
- FR-A- 2 257 847
- FR-A- 2 653 180
- US-A- 2 973 976

## Beschreibung

Die Erfindung betrifft eine Hochdruck-Leitungsverbindung zwischen einer Druckleitung und einer Abzweigleitung.

Eine derartige Hochdruck-Leitungsverbindung ist aus DE-A-3427730 bekannt; dabei geht es um eine Abzweigleitung von einer Kraftstoffeinspritzeinrichtung zu einer Abstellvorrichtung für den Kraftstoff.

Vorliegend ist jedoch eine andere Verwendung für die Hochdruck-Leitungsverbindung vorgesehen, nämlich bei einem Dieselmotor für den Anschluß der mit der Einspritzpumpe verbundenen Druckleitung an einem Düsenhalter.

Bei einem aus DE-A-4030484 bekannten Abzweigverbinder in einer Druckleitung ist eine Querbohrung durch den Mantel der Druckleitung im Zentrum einer sich nach außen konisch erweiternden Widerlagerfläche vorgesehen. Für den Anschluß einer Abzweigleitung wird ein Druckkopfabschnitt mit seinem konischen Ende bis zum Erreichen der Dichtwirkung gegen die Widerlagerfläche gepreßt; dabei besteht die Gefahr einer Deformation der Druckleitung, die zur deren Verengung oder sogar zu einer Beeinträchtigung der Dichtwirkung führen kann.

Die zu schaffende Hochdruck-Leitungsverbindung soll den Anforderungen einer einfachen Montage und einer zuverlässigen Dichtheit der Verbindung nachkommen. Diesen Anforderungen genügt die Kombination der Merkmale 1.1 bis 1.5 von Anspruch 1.

Dabei liegt der in die Querbohrung eintretende Zentriervorsprung des Verbindungskörpers an der Wand der Querbohrung an und stützt diese gegen den durch den Niederhalter über den Verbindungskörper auf die Druckleitung ausgeübten Druck nach innen ab. Durch diesen Zentriervorsprung wird beim Zusammenpressen von Niederhalter und Gehäuseteil eine Deformierung der Druckleitung zuverlässig vermieden; diese ist bei geschlossenem Niederhalter im übrigen fest zwischen den beid erseitigen Nuten gehalten und über den Verbindungskörper dichtend an die Abzweigleitung angeschlossen, wobei der Verbindungskörper auf eine Sitzfläche der Druckleitung aufgepreßt wird. Dadurch daß der Verbindungskörper in eine Erweiterungsbohrung der Abzweigleitung eingepaßt ist, wird bei einfacher Montage ein zusätzlicher Dichtungseffekt erzielt. Eine besonders vorteilhafte Ausgestaltung besteht darin, daß auf dem Zentriervorsprung ein durch Festziehen des Niederhalters verformbarer Dichtungsring sitzt, der im einbaufertigen Zustand den Ringraum zwischen einer zurückgesetzten Ringschulter des Verbindungskörpers und der gegenüberliegenden Außenwand der Druckleitung dichtend ausfüllt.

Zur Verbesserung des Materialflusses bei der Verformung ist zweckmäßig, daß der Zentriervorsprung zur Ringschulter hin eine kegelige Fußerweiterung aufweist. Der vorteilhaft aus weich verformbarem Stahl, Kupfer oder dgl. bestehende Dichtungsring erfährt beim Festziehen des Niederhalters eine radiale Erweiterung bis er dichtend an einer den Ringraum radial begrenzenden Erweiterungsbohrung, in welcher der Verbindungskörper aufgenommen ist, anliegt. Während seiner Verformung stützt sich der Dichtungsring radial nach innen gegen den Zentriervorsprung des zweckmäßig aus gehärtetem Stahl bestehenden Verbindungskörpers ab, wobei er sich entsprechend dessen Fußerweiterung verformt. Sowohl der Dichtungsring als auch die Druckleitung bestehen im Vergleich zum Verbindungskörper aus leichter verformbaren Stählen oder dergleichen metallenen Werkstoffen.

Zur Vergrößerung der Dichtfläche des Ringraums ist ferner vorgesehen, daß in der Außenwand der Druckleitung im Mündungsbereich der Querbohrung eine ebene Anlagefläche für den Dichtungsring ausgebildet ist.

Während der Außendurchmesser des Dichtungsrings vor seiner Verformung etwas kleiner ist als jener des Verbindungskörpers, so daß der Dichtungsring lose in die Erweiterungsbohrung paßt, in welcher der Verbindungskörper aufgenommen ist, kommt es im Zuge der Montage, also während des Niederspannens des Niederhalters gegen den Gehäuseteil zu der bereits oben erläuterten Verformung des Dichtungsrings, der am Ende des axialen Spannhubs den genannten Ringraum vollständig und dichtend ausfüllt. Der Spannhub kann dabei entweder durch Messen der axialen Verstellung zwischen Niederhalter und Gehäuseteil oder des Schraubendrehmoments kontrolliert werden.

Durch ein sog. Gleichdruckventilsystem in der Einspritzpumpe ist es möglich, den Düsenhalter bei Verzicht auf eine Leckölrückführung nur an eine Abzweigleitung gemäß der vorliegenden Erfindung anzuschließen. Auf diese Weise ergibt sich eine besonders einfache Leitungsverbindung zwischen Einspritzpumpe und Düsenhalter.

Im folgenden wird ein Ausführungsbeispiel der Erfindung anhand der Zeichnung erläutert. Es zeigt
- Fig. 1: einen Querschnitt durch die Druckleitung vor dem Niederspannen des Niederhalters
- Fig. 2: einen Querschnitt gemäß Fig. 1 nach dem Niederspannen des Niederhalters und
- Fig. 3: eine Draufsicht auf den Niederhalter.

Eine zur Einspritzpumpe an einem Dieselmotor führende Druckleitung 1 verläuft zwischen einem Düsenhalter 2 und einem darauf aufgesetzten Niederhalter 3. Der Niederhalter 3 ist mittels zweier Spannschrauben 4, welche in entsprechende Bohrungen 5 im Gehäuse des Düsenhalters 2 einschraubbar sind, mit diesem verspannbar. Die Druckleitung 1 ist mit einem oberen Teilumfang aufgenommen in einer Nut 6 des Niederhalters 3 und mit einem unteren Teilumfang in einer Nut 7 des Düsenhalters 2. Die Druckleitung 1 besitzt eine nur nach einer Seite ausmündende Querbohrung 8, welche mit einer Abzweigleitung 9 im Düsenhalter 2 axial fluchtend ausgerichtet ist. In einer Erweiterungsbohrung 10 im Mündungsbereich der Abzweigleitung 9 sitzt ein Verbindungskörper 11, der zur Querbohrung hin einen Zentriervorsprung 12 aufweist; dieser ist mittig innerhalb einer Ringschulter 21 des Verbindungskörpers 11 angeordnet und besitzt im Übergangsbereich zur Ringschulter 21 eine kegelige Fußerweiterung 13. Der Verbindungskörper 11 besitzt ferner eine Durchgangsbohrung 14, über welche der Kraftstoff aus der Druckleitung 1 in die Abzweigleitung 9 und von dort zur Einspritzdüse gelangt. Der Zentriervorsprung 12 tritt mit leichter Schiebesitzpassung in die Querbohrung 8 ein. Beim Aufpressen des Verbindungskörpers 11 auf die Druckleitung 1 zwecks Abdichtung der Leitungsverbindung sorgt der Zentriervorsprung dafür, daß die Druckleitung 1 sich nicht verformt.

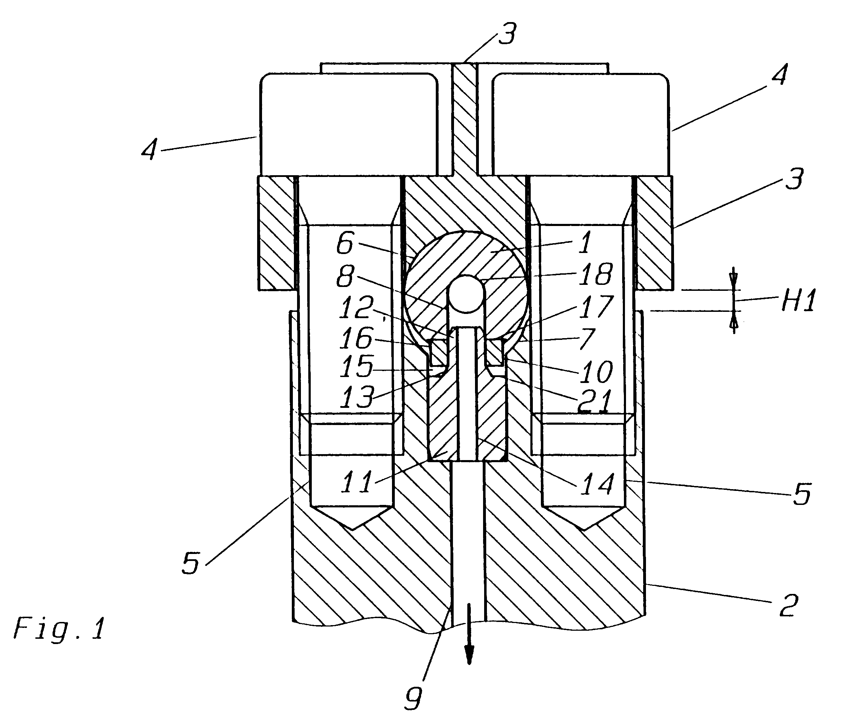

Gemäß Fig. 1 erkennt man einen Ringraum 15 um den Zentriervorsprung 12 des Verbindungskörpers 11 herum, in welchen ein auf dem Zentriervorsprung 12 sitzender Dichtungsring 16 hineinragt. In dieser Stellung ist der Dichtungsring 16 noch unverformt (Fig. 1), wobei er mit seiner oberen Stirnfläche an einer ebenen Anlagefläche 17 der Druckleitung 1 anliegt.

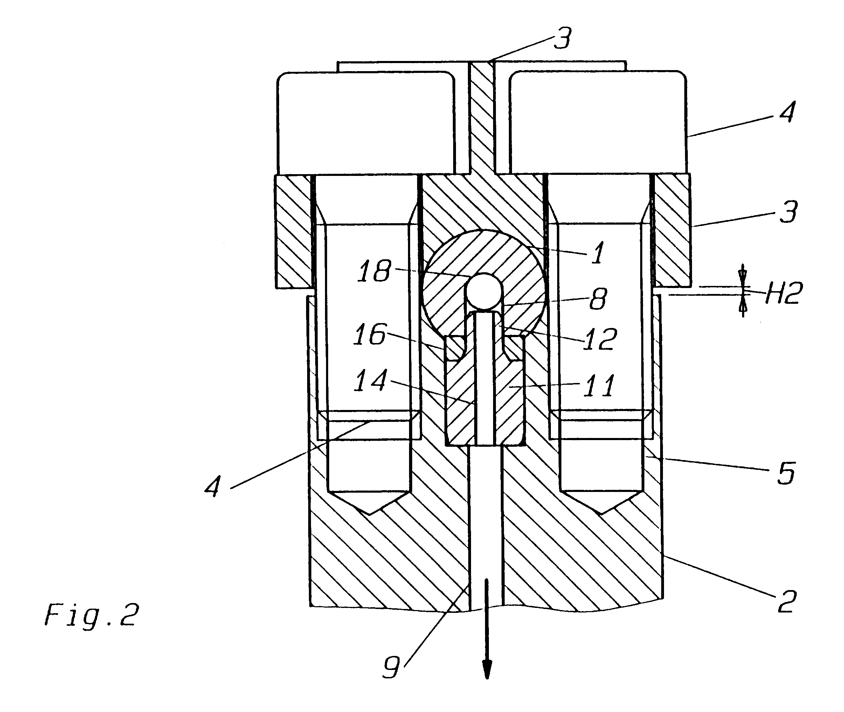

Nach dem vollständigen Niederspannen des Niederhalters 3 füllt der Dichtungsring 16, wie in Fig. 2 gezeigt, den Ringraum innerhalb der Erweiterungsbohrung 10 des Düsenhalters 2 vollständig aus. Bezogen auf die Ausgangslage gemäß Fig. 1 hat sich der Abstand zwischen dem Niederhalter 3 und dem Düsenhalter 2 von H1 (Fig. 1) auf H2 (Fig. 2) verringert, d.h. der Spannweg des Niederhalters 3 und dementsprechend der Verformungsweg des Dichtungsrings 16 entspricht der Differenz (H1-H2). In dieser Endstellung erreicht der Zentriervorsprung 12 gerade die Wand der Leitungsbohrung 18 der Druckleitung 1; durch den in die Querbohrung 8 eintretenden Zentriervorsprung 12 wird die Druckleitung 1 nach innen abgestützt, so daß sie dem Spanndruck zwischen Niederhalter 3 und Düsenhalter 2 standhält.

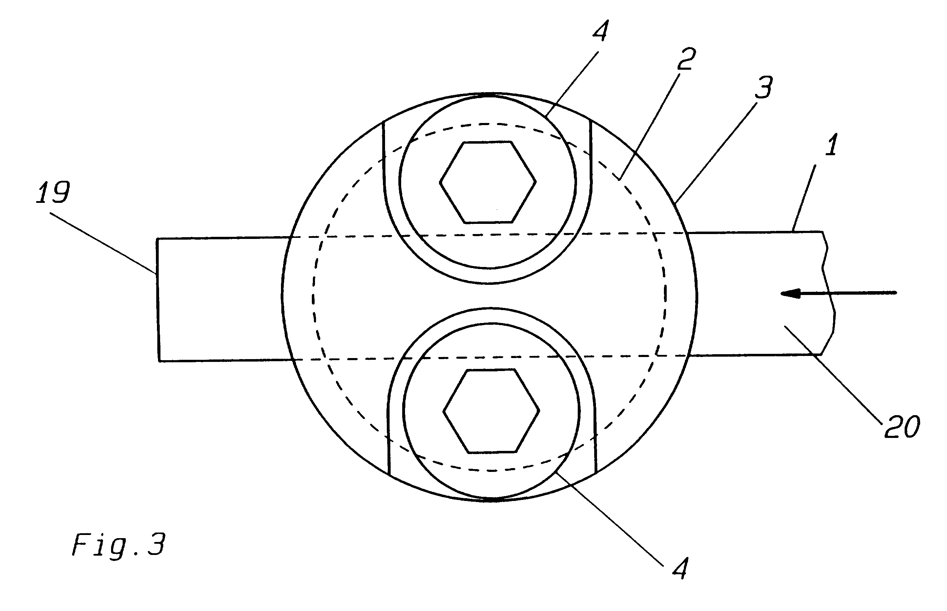

Gemäß Fig. 3 erkennt man in der Draufsicht den Niederhalter 3 mit den beiden gegenüber der Druckleitung 1 angeordneten Spannschrauben 4. Das linke Ende 19 der Druckleitung 1 ist verschlossen; deren rechtes abgebrochen dargestelltes Ende 20 führt zur (nicht gezeigten) Einspritzpumpe.

## Patentansprüche

1. Hochdruck-Leitungsverbindung zwischen einer Druckleitung (1) und einer Abzweigleitung (9), für den Anschluß der mit der Einspritzpumpe verbundenen Druckleitung (1) an einem Düsenhalter (2),
insbesondere bei einem Dieselmotor mit folgenden Merkmalen:
1.1. der Düsenhalter (2) besitzt anschlußseitig einen auf diesen aufschraubbaren Niederhalter (3);
1.2. die Druckleitung (1) ist in der Trennebene zwischen Düsenhalter (2) und Niederhalter (3) unterbrechungsfrei geführt;
1.3. die Druckleitung (1) ist mit einem Teilumfang in einer Nut (6) des Niederhalters (3) und mit einem gegenüberliegenden Teilumfang in einer Nut (7) des Düsenhalters (2) aufgenommen, wobei beide Nuten (6, 7) an die Form der Druckleitung (1) angepaßt sind;
1.4. die Druckleitung (1) besitzt ein verschlossenes Ende (19) und mit Abstand davon eine zur Düsenhalternut (7) hin offene Querbohrung (8), deren Mündung derjenigen einer Abzweigleitung (9), welche die Düsenhalternut (7) mit der Düse im Düsenhalter (2) verbindet, gegenüber liegt;
1.5. im Mündungsbereich der Abzweigleitung (9) ist in eine Erweiterungsbohrung (10) im Düsenhalter (2) ein Verbindungskörper (11) mit entsprechender Durchgangsbohrung (14) eingepaßt, welcher zur Druckleitung (1) hin einen in die Querbohrung (8) eintretenden Zentriervorsprung (12) aufweist, welcher die Querbohrung (8) gegen den durch den Niederhalter (3) über den Verbindungskörper (11) auf die Druckleitung (1) ausgeübten Druck nach innen abstützt.

2. Hochdruck-Leitungsverbindung nach Anspruch 1,
dadurch gekennzeichnet,
daß auf dem Zentriervorsprung (12) ein durch Festziehen des Niederhalters (3) verformbarer Dichtungsring (16) sitzt, der im einbaufertigen Zustand den Ringraum (15) zwischen einer zurückgesetzten Ringschulter (21) des Verbindungskörpers (11) und der gegenüberliegenden Außenwand der Druckleitung (1) dichtend ausfüllt.

3. Hochdruck-Leitungsverbindung nach Anspruch 2,
dadurch gekennzeichnet,
daß der Zentriervorsprung (12) zur Ringschulter (21) hin eine kegelige Fußerweiterung (13) aufweist.

4. Hochdruck-Leitungsverbindung nach Anspruch 2,
dadurch gekennzeichnet,
daß in der Außenwand der Druckleitung (1) im Mündungsbereich der Querbohrung (8) eine ebene Anlagefläche (17) für den Dichtungsring (16) ausgebildet.

5. Hochdruck-Leitungsverbindung nach Anspruch 2,
dadurch gekennzeichnet,
daß der Außendurchmesser des Dichtungsrings (16) vor seiner Verformung etwas kleiner ist als jener des Verbindungskörpers (11).

## Claims

1. High pressure line connection between a pressure line (1) and a branch line (9) for the connection of the pressure line (1) connected to the injection pump, to a nozzle holder (2) [especially in a diesel engine] with the following features: 1.1 at the connection side the nozzle holder (2) has a hold-down (3) able to be screwed onto the latter;
1.2 the pressure line (1) is guided free from interruptions in the plane of separation between the nozzle holder (2) and hold-down (3);
1.3 the pressure line (1) is received with a partial periphery in a groove (6) of the hold-down (3) and with an opposed partial periphery in a groove (7) of the nozzle holder (2), both grooves (6,7) being adapted to the shape of the pressure line (1); 1.4 the pressure line (1) has a closed end (19) and at a distance therefrom a transverse bore (8) open towards the nozzle holder groove (7), the opening of which lies opposite that of a branch line (9), which connects the nozzle holder groove (7) to the nozzle in the nozzle holder (2);
1.5 in the opening region of the branch line (9), fitted in an enlargement bore (10) in the nozzle holder (2) is a connecting member (11) with a corresponding through-hole (14), which towards the pressure line (1) comprises a centering projection (12) entering the transverse bore (8), which centering projection supports the transverse bore (8) on the inside against the pressure exerted by the hold-down (3) by way of the connecting member (11) on the pressure line (1).

2. High pressure line connection according to Claim 1, characterised in that seated on the centering projection (12) is a gasket ring (16) able to be deformed by tightening of the hold-down (3), which gasket ring in the finished fitted state, hermetically fills the annular gap (15) between a recessed annular shoulder (2) of the connecting member (11) and the opposite outer wall of the pressure line (1).

3. High pressure line connection according to Claim 2, characterised in that towards the annular shoulder (21) the centering projection (12) has a conical base enlargement (13).

4. High pressure line connection according to Claim 2, characterised in that formed in the outer wall of the pressure line (1) in the opening region of the transverse bore (8) is a flat contact surface (17) for the gasket ring (16).

5. High pressure line connection according to Claim 2, characterised in that the outer diameter of the gasket ring (16) before its deformation is somewhat smaller than that of the connecting member (11).

## Revendications

1. Raccordement de conduite à haute pression entre une conduite sous pression (1) et une conduite de dérivation (9) pour brancher la conduite sous pression (1) reliée à la pompe à injection à un porte-injecteur (2), en particulier pour un moteur diesel, présentant les caractéristiques suivantes :
1.1. le porte-injecteur (2) comporte, du côté branchement, un dispositif de serrage (3) pouvant être vissé sur ledit porte-injecteur ;
1.2. la conduite sous pression (1) est guidée en continu dans le plan de séparation situé entre le porte-injecteur (2) et le dispositif de serrage (3) ;
1.3. la conduite sous pression (1) est logée par un pourtour partiel dans une rainure (6) du dispositif de serrage (3), et par un pourtour partiel opposé dans une rainure (7) du porte-injecteur (2), les deux rainures (6,7) étant adaptées à la forme de la conduite sous pression (1) ;
1.4. la conduite sous pression (1) comporte une extrémité (19) fermée et, à distance de celle-ci, un perçage transversal (8) s'ouvrant sur la rainure du dispositif de serrage (7) et dont l'embouchure fait face à celle d'une conduite de dérivation (9) reliant la rainure du porte-injecteur (7) à l'injecteur du porte-injecteur (2) ;
1.5. dans la zone d'embouchure de la conduite de dérivation (9), dans un perçage d'élargissement (10) du porte-injecteur (2), est adapté un corps de raccordement (11) comportant un perçage de passage (14) correspondant, lequel corps présente en direction de la conduite sous pression (1) une saillie de centrage (12) pénétrant dans le perçage transversal (8) et étayant vers l'intérieur le perçage transversal (8) contre la pression exercée sur la conduite sous pression (1) par le dispositif de serrage (3) par l'intermédiaire du corps de raccordement ( 1).

2. Raccordement de conduite à haute pression suivant la revendication 1, caractérisé en ce qu'une bague d'étanchéité (16), pouvant être déformée par le serrage du dispositif de serrage (3), est appuyée sur la saillie de centrage (12), laquelle bague garnit de manière étanche, à l'état prêt au montage, l'espace annulaire (15) compris entre un épaulement annulaire (21) en retrait du corps de raccordement (11) et la paroi extérieure opposée de la conduite sous pression (1).

3. Raccordement de conduite à haute pression suivant la revendication 2, caractérisé en ce que la saillie de centrage (12) présente en direction de l'épaulement annulaire (21) un élargissement de pied (13) conique.

4. Raccordement de conduite à haute pression suivant la revendication 2, caractérisé en ce qu'une face de départ (17) plane est réalisée dans la paroi extérieure de la conduite sous pression (1), dans la zone d'embouchure du perçage transversal (8), pour la bague d'étanchéité (16).

5. Raccordement de conduite à haute pression suivant la revendication 2, caractérisé en ce que le diamètre extérieur de la bague d'étanchéité (16) est un peu plus petit, avant sa déformation, que celui du corps de raccordement (11).
